# EUROPÄISCHE PATENTSCHRIFT

(11) **EP 2 522 948 B1**
(45) Veröffentlichungstag und Bekanntmachung des Hinweises auf die Patenterteilung: **22.02.2017**
(21) Anmeldenummer: 12165898.3
(22) Anmeldetag: 27.04.2012
(51) Int. Cl.: F42B 3/00, B64C 27/00, F16P 5/00, F15B 20/00, F16B 7/18

(54) **Pyrotechnisch schwächbare Verbindung zweier Teile**
Pyrotechnically weakenable connection between two elements
Connection entre deux parties affaiblissable par pyrotechnie

(30) Priorität: 27.04.2011 DE 102011018667
(43) Veröffentlichungstag der Anmeldung: 14.11.2012
(73) Patentinhaber: Bayern-Chemie Gesellschaft für flugchemische Antriebe mbH, 84544 Aschau a. Inn (DE)
(72) Erfinder: Huber, Johann, 83341 Rattenkirchen (DE); Stadler, Ludwig, 84453 Mühldorf (DE); Ringeisen, Axel, 83278 Traunstein (DE)
(74) Vertreter: LS-MP von Puttkamer Berngruber Loth Spuhler

(56) Entgegenhaltungen:
- EP-A1- 1 882 621
- WO-A2-02/35305
- DE-A1- 10 127 483
- US-A- 2 732 765
- US-A- 2 858 726
- US-A- 3 024 592
- US-A- 3 114 962

## Beschreibung

Die Erfindung betrifft eine Vorrichtung zur mechanischen Verbindung eines Aktuators mit einem von dem Aktuator axial angetriebenen Schubelement.

Aus der WO02/35505 ist eine einen Stift aufweisende Zugvorrichtung bekannt, bei der ein Element, wie beispielsweise ein Stift oder eine Welle, durch ein nichtpyrotechnisches Betätigungsglied, beispielsweise eine Feder, bewegt wird. Das Betätigungsglied ist in der komprimierten und belasteten Position gehalten durch einen Freigabemechanismus, beispielsweise einen Sprengbolzen, der mit einem Halter wechselwirkt. Durch ein Signal wird der Freigabemechanismus von dem Halter durchtrennt und das Element durch die Kraft des Betätigungsglieds betätigt.

Der Stand der Technik gemäß US 3,024,592 bezieht sich auf eine Betätigungsvorrichtung und insbesondere auf eine Stiftbetätigungsvorrichtung, die ein geringes Gewicht, kompakt, zuverlässig und verfügt über ein großes Leistungsgewicht, und mit einem Design, das die Vorrichtung anpassungsfähig an variierende Hubmaßnahmen und Kräfte macht.

Aus der EP 1 882 621 ist eine pyromechanische Entriegelungsvorrichtung mit einem Gehäuse, einem mit dem Gehäuse verbundenen pyrotechnischen Zündelement und einem Verriegelungselement, welches durch Beaufschlagung durch das Zündelement relativ zu dem Gehäuse bewegbar und aus einer Verriegelungslage in eine Entriegelungslage bringbar ist, bekannt. Die Entriegelung erfolgt durch eine Absprengung des Verriegelungselements.

Aus dem Stand der Technik sind weiterhin mechanische oder elektromechanische Axialkupplungen bekannt, die über entsperrbare Kugeln oder Klauen den axialen Kraftfluss an Aktuatoren unterbrechen. Derartige Baugruppen bestehen oft aus einer größeren Anzahl von Bauteilen, die im Funktionsfall gegeneinander verschoben werden. Die Funktion derartiger Vorrichtungen ist jedoch besonders störanfällig gegenüber Verschmutzungen, Korrosion, Verschleiß der Baugruppen bzw. gegenüber Änderungen des Reibfaktors der Kugeln oder Klauen zueinander, ferner Vibrationen.

Vor diesem Hintergrund liegt der Erfindung die Aufgabe zugrunde, eine Trennvorrichtung zur Unterbrechung des Kraftflusses an Aktuatoren anzugeben, die weniger störungsanfällig gegenüber den oben genannten Faktoren ist.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Die erfindungsgemäße Vorrichtung weist auf einen Aktuator, ein Schubelement, das axial von dem Aktuator angetrieben wird, wenigstens ein Verbindungselement, das den Aktuator und das Schubelement verbindet, und das zwischen dem Aktuator und dem Schubelement angeordnet ist, wenigstens ein pyrotechnisches Bauteil, aufweisend wenigstens eine Zündeinheit und wenigstens eine pyrotechnische Ladung, wobei das pyrotechnische Bauteil derart angeordnet ist, dass das von diesem erzeugbare Heißgas auf das wenigstens eine Verbindungselement gerichtet ist, und wobei das wenigstens eine Verbindungselement durch das von dem wenigstens einen pyrotechnischen Bauteil erzeugbare Heißgas derart schwächbar ist, dass das Schubelement von dem Aktuator trennbar ist.

Eine bevorzugte Ausführungsform der Vorrichtung ist dadurch gekennzeichnet, dass das Verbindungselement von dem Heißgas wenigstens teilweise um- und/oder durchströmbar ist.

Vorzugsweise ist das Verbindungselement als Hohlniet ausgebildet. Alternativ kann das Verbindungselement durch andere Bauteile gebildet sein, die vorzugsweise eine wenigstens teilweise durchgängige Öffnung aufweisen, durch die das von dem pyrotechnischen Bauteil erzeugbare Heißgas durch- und/oder durchströmbar ist. Vorzugsweise weist das Verbindungselement eine große Kontaktfläche gegenüber dem Heißgas auf.

Eine weitere bevorzugte Ausführungsform der Vorrichtung ist dadurch gekennzeichnet, dass das Verbindungselement durch das von dem pyrotechnischen Bauteil erzeugbare Heißgas derart verformbar ist, dass der Aktuatoren axialer Richtung unabhängig von dem Schubelement bewegbar ist. Das von dem pyrotechnischen Bauteil erzeugbare Heißgas ist vorzugsweise derart auf das Verbindungselement gerichtet, dass dieses sich entweder derart verformt, was die durch das Verbindungselement gebildete mechanische Verbindung zwischen dem Schubelement und dem Aktuator getrennt wird, oder dass das Verbindungselement durch das Heißgas schmilzt oder verdampft und somit die mechanische Verbindung zwischen dem Schubelement und dem Aktuator löst.

Eine weitere bevorzugte Ausführungsform der Vorrichtung ist dadurch gekennzeichnet, dass der Aktuator eine Spindel aufweist, die durch den Aktuator in axialer Richtung bewegbar ist.

Vorzugsweise ist die Spindel als Hohlspindel, Hohlkolben oder Vollspindel ausgebildet.

Eine bevorzugte Ausführungsform der Vorrichtung ist dadurch gekennzeichnet, dass das wenigstens eine Verbindungselement zwischen der Spindel und dem Schubelement angeordnet ist. Das Schubelement ist über wenigstens ein Verbindungselement mit der Spindel mechanisch verbunden, so dass eine axiale Bewegung der Spindel auf der Schubelement direkt Übertragen wird.

Eine weitere bevorzugte Ausführungsform der Vorrichtung ist dadurch gekennzeichnet, dass mehrere Verbindungselemente zwischen dem Aktuator bzw. der Spindel und dem Schubelement angeordnet sind. Vorzugsweise sind die Verbindungselemente hierbei in radialer oder axialer Richtung um den Verbindungsbereich zwischen Aktuator bzw. Spindel und dem Schubelement angeordnet.

Eine bevorzugte Ausführungsform der Vorrichtung ist dadurch gekennzeichnet, dass jedes Verbindungselement jeweils einen pyrotechnischen Bauteil zugeordnet ist.

Eine weitere bevorzugte Ausführungsform der Vorrichtung ist dadurch gekennzeichnet, dass mehrere Verbindungselemente einem pyrotechnischen Bauteil zugeordnet sind. Vorzugsweise ist das von dem pyrotechnischen Bauteil erzeugbare Heißgas auf mehrere Verbindungselemente leitbar. Das von dem pyrotechnischen Bauteil erzeugbare Heißgas wird vorzugsweise durch ein oder mehrere Strahlumlenkungen auf die jeweiligen Verbindungselemente geleitet.

Eine weitere bevorzugte Ausführungsform der Vorrichtung ist dadurch gekennzeichnet, dass das Verbindungselement und/oder das pyrotechnische Bauteil durch wenigstens ein Dichtungselement nach außen hin abgedichtet sind.

Eine bevorzugte Ausführungsform der Vorrichtung ist dadurch gekennzeichnet, dass das Schubelement als Schubstange oder Schubrohr ausgebildet ist.

Eine weitere bevorzugte Ausführungsform der Vorrichtung ist dadurch gekennzeichnet, dass der Aktuator mit dem Schubelement wenigstens durch Reaktivierung des pyrotechnischen Bauteils und durch Anbringen wenigstens eines neuen Verbindungselements wieder verbindbar ist. Die Vorrichtung ist vorzugsweise derart ausgebildet, dass das durch das Heißgas verformte bzw. ausgeschmolzene oder verdampfte Verbindungselement durch ein neues Verbindungselement ersetzt werden kann. Das pyrotechnische Bauteil ist vorzugsweise ebenfalls derart ausgebildet, dass wenigstens die pyrotechnische Ladung und gegebenenfalls die Zündeinheit ausgetauscht bzw. erneuert werden müssen. Die voneinander getrennten Schubelement und Spindel bzw. Aktuator können somit leicht wieder mechanisch miteinander verbunden werden.

Besonders bevorzugt eignet sich die zuvor beschriebene Vorrichtung zur Verwendung zur Steuerung einer Taumelscheibe, wie sie beispielsweise zum Richtungssteuerung eines Helikopters verwendet wird, wobei die Steuerung in jede Richtung jeweils mindestens zwei zuvor beschriebene Vorrichtungen aufweist. Bei Blockierung einer der beiden Vorrichtungen pro angesteuerte Richtung ist die blockierte Vorrichtung durch Aktivierung des pyrotechnischen Bauteils trennbar. Durch Trennung der blockierten Vorrichtung ist die zweite Vorrichtung zur Ansteuerung der Taumelscheibe weiterhin verwendbar.

Vorzugsweise eignet sich die zuvor beschriebene Vorrichtung insbesondere bei redundant, beispielsweise doppelt ausgelegten, beispielsweise axial bewegbaren Maschinenelementen, um einen Totalausfall der Maschine bei Blockade einer der beiden Vorrichtungen zu vermeiden.

Der Vorteil der erfindungsgemäßen Vorrichtung zur mechanischen Verbindung eines Aktuators mit einem von dem Aktuator axial angetriebenen Schubelement besteht darin, dass diese durch den oben beschriebenen Aufbau weniger störanfällig gegenüber Verschmutzungen, Korrosion, Verschleiß der Baugruppen bzw. gegenüber Änderungen des Reibfaktors der Kugeln oder Klauen zueinander und dadurch eine höhere Zuverlässigkeit aufweist.

Weitere Vorteile, Merkmale und Einzelheiten der Erfindung ergeben sich aus der nachfolgenden Beschreibung, in der unter Bezugnahme auf die Zeichnungen ein Ausführungsbeispiel im Einzelnen beschrieben ist.

### Es zeigen:

- Figur 1: eine erste Ausführungsform der erfindungsgemäßen Vorrichtung, und
- Figur 2: eine weitere Ausführungsform der erfindungsgemäßen Vorrichtung.

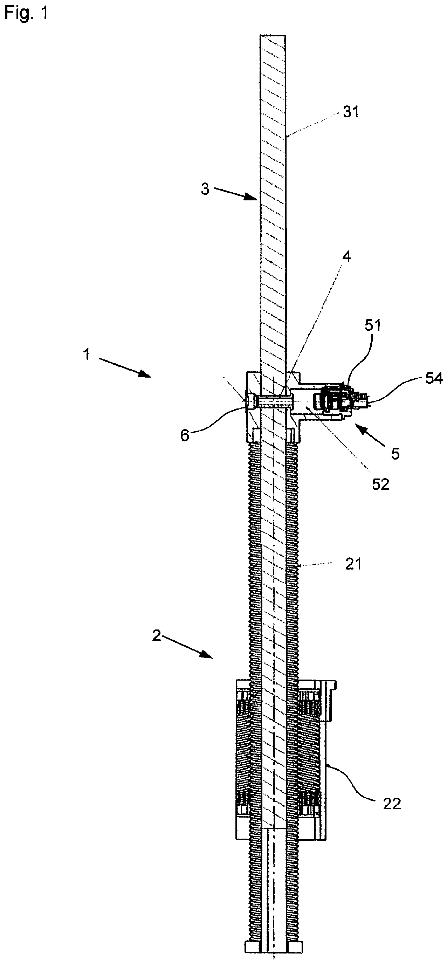

In Figur 1 ist eine erste Ausführungsform der erfindungsgemäßen Vorrichtung 1 dargestellt.

Die erfindungsgemäße Vorrichtung weist auf einen Aktuator, ein Schubelement, das axial von dem Aktuator angetrieben wird, wenigstens ein Verbindungselement, das den Aktuator und das Schubelement verbindet, und das zwischen dem Aktuator und dem Schubelement angeordnet ist, wenigstens ein pyrotechnisches Bauteil, aufweisend wenigstens eine Zündeinheit und wenigstens eine pyrotechnische Ladung, wobei das pyrotechnische Bauteil derart angeordnet ist, dass das von diesem erzeugbare Heißgas auf das wenigstens eine Verbindungselement gerichtet ist, und wobei das wenigstens eine Verbindungselement durch das von dem wenigstens einen pyrotechnischen Bauteil erzeugbare Heißgas derart schwächbar ist, dass das Schubelement von dem Aktuator trennbar ist.

In der Vorrichtung 1 wird ein mechanischer Aktuator 2 mit einem Schubelement 3 in axialer Richtung derart verbunden, dass bei einer axialen Bewegung des beweglichen Teils des Aktuators 2, der in der dargestellten Ausführungsform durch eine Spindel 21 gebildet ist, das Schubelement 3 axial mit bewegt wird. Der Aktuator 2 umfasst einen ortsfesten Antrieb 22 und eine in axialer Richtung bewegliche Spindel 21. Die Spindel 21 ist in der dargestellten Ausführungsform als Hohlspindel ausgebildet. Die Spindel 21 ist mit einem Schubelement 3 in Form einer Schubstange 31 mechanisch über ein Verbindungselement 4 verbunden. Die Schubstange 31 ist teilweise in einer Bohrung in der Hohlspindel 21 angeordnet. In der dargestellten Ausführungsform ist die Schubstange 31 nur mittels eines Verbindungselements 4 mit der Spindel 21 verbunden. Die Vorrichtung kann auch mehrere Verbindungselemente 4 aufweisen, die die Spindel 21 mit dem Schubelement 3 verbinden. Der Antrieb 22 kann beispielsweise als Rollengewindeantrieb ausgebildet sein.

Vorzugsweise ist die Vorrichtung 1 dort einsetzbar, wo eine mechanische Ansteuerung mittels eines axial angetriebenen Schubelements 3 über einen Aktuator 2 redundant ausgelegt ist. Bei der Blockade einer dieser Schubelemente 3 ist das oder die weiteren Schubelemente 3 ebenfalls blockiert. Um eine Blockade des noch frei funktionierenden Schubelements 3 zu verhindern, weist die Vorrichtung 1 ein pyrotechnisches Bauteil 5 auf. Das pyrotechnische Bauteil 5 weist eine Zündeinheit 51 auf, mittels der wenigstens eine pyrotechnische Ladung 52 aktivierbar ist. Die pyrotechnische Ladung 52 erzeugt bei Aktivierung ein sehr heißes Gas mit hohem Druck. Das pyrotechnische Bauteil 5 ist derart ausgebildet, dass das von der aktivierten pyrotechnischen Ladung 52 erzeugt heiße Gas in Richtung auf das Verbindungselement 4 gerichtet ist. Das heiße Gas um- und/oder durchströmt das Verbindungselement 4, so dass dieses sich derart verformt oder wenigstens teilweise auflöst, dass die mechanische Verbindung zwischen der Spindel 21 und der Schubstange 31 unterbrochen wird. Nach der Trennung der Schubstange 31 von der Spindel 21 ist das redundant ausgelegte Schubelement wieder frei beweglich und die Ansteuerung ist nicht mehr blockiert. Das Verbindungselement 4 ist beispielsweise als Hohlniet ausgebildet, durch das das heiße Gas leicht durchströmen kann. Vorzugsweise ist wenigstens das Verbindungselement 4 nach außen hin durch ein Dichtungselement abgedichtet, so dass kein Schmutz in z.B. das Hohlniet eindringen kann und ein Aufschmelzen verhindern kann.

Zur Aktivierung der Zündeinrichtung 51 weist das pyrotechnische Bauteil 5 ein oder mehrere Kontaktanschlüsse 54 auf. Vorzugsweise ist das pyrotechnische Bauteil 5 nach außen hin gegen eindringende Verunreinigungen abgedichtet.

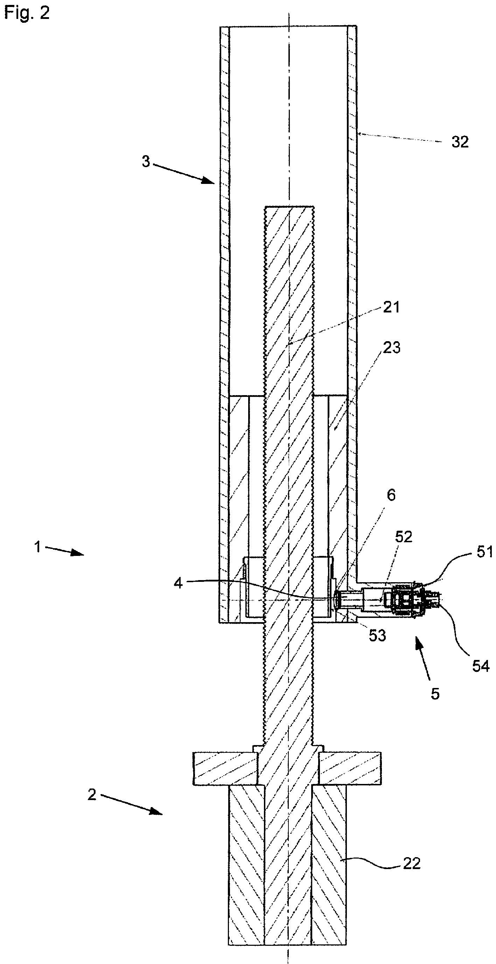

In Figur 2 ist eine weitere Ausführungsform der erfindungsgemäßen Vorrichtung 1 dargestellt. Bei der in Figur 2 dargestellten Ausführungsform der Vorrichtung 1 ist die Spindel 21 als Vollspindel ausgeführt und ist ortsfest angeordnet. Die Spindel 21 bewegt sich nicht in axialer Richtung sondern weist nur eine Rotationsbewegung auf. Die Spindel 21 wird durch einen Antrieb 22 angetrieben. Auf der Spindel 21 ist ein Spindelelement 23 angeordnet, das bei Rotation der Spindel 21 axial bewegbar ist. Das Spindelelement 23 ist über ein oder mehrere Verbindungselemente 4 mit einem Schubelement 3, in der Form eines Schubrohrs 32 verbunden. Bei einer axialen Bewegung des Spindelelements 23 durch Rotation der Spindel 21 wird das Schubrohr 23 axial mit bewegt. Zur Trennung der Verbindung zwischen dem Spindelelement 23 und dem Schubrohr 32 weist die Vorrichtung 1 ein oder mehrere pyrotechnische Bauteile 5 auf. Bei Aktivierung der Zündeinheit 51 erzeugt die pyrotechnische Ladung 52 des pyrotechnischen Bauteils 5 heiße Gase. Die heißen Gase werden u.a. durch eine oder mehrere Strahlumlenkungen 53 auf das Verbindungselement 4 geleitet. Des Weiteren sorgen die Strahlumlenkungen 53 dafür, dass die Spindel 21 durch die heißen Gase nicht beschädigt wird. Durch die heißen Gase des pyrotechnischen Bauteils 5 wird das Verbindungselement 4 derart verformt bzw. aufgelöst, dass die mechanische Verbindung zwischen dem Schubrohr 32 und dem Spindelelement 23 und somit zu der Spindel 21 getrennt wird.

Das Verbindungselement 4 bzw. das pyrotechnische Bauteil 5 sind vorzugsweise mittels Dichtungselementen 6 gegen eindringende Verunreinigungen abgedichtet.

Um die Vorrichtung wieder zu Reaktivieren reicht es aus, wenn das pyrotechnische Bauteil 5, etwa durch einbringen einer neuen pyrotechnischen Ladung 52 reaktiviert wird und ein bzw. mehrere neue Verbindungselemente 4 zwischen Spindel 21 bzw. Spindelelement 23 und Schubelement 3 eingepasst werden.
Die Vorrichtung 1 eignet sich vorzugsweise zur Trennung von mechanisch miteinander verbundenen Bauteilen, die schnell voneinander getrennt werden müssen. Vorzugsweise eignet sich die Vorrichtung bei einer redundant ausgelegten Ansteuerung beispielsweise einer Taumelscheibe eines Helikopters, um eine Blockierung der redundant ausgelegten Ansteuerungen zu verhindern.

### Bezugszeichenliste

- 1: Vorrichtung
- 2: Aktuator
- 21: Spindel
- 22: Antrieb
- 23: Spindelelement
- 3: Schubelement
- 31: Schubstange
- 32: Schubrohr
- 4: Verbindungselement
- 5: pyrotechnisches Bauteil
- 51: Zündeinheit
- 52: pyrotechnische Ladung
- 53: Strahlumlenkung
- 54: Kontaktanschluss
- 6: Dichtungselement

## Patentansprüche

1. Vorrichtung aufweisend einen Aktuator (2), ein Schubelement (3), das axial von dem Aktuator (2) angetrieben wird, wenigstens ein Verbindungselement (4), das den Aktuator (2) und das Schubelement (3) verbindet, und das zwischen dem Aktuator (2) und dem Schubelement (3) angeordnet ist, wenigstens ein pyrotechnisches Bauteil (5), aufweisend wenigstens eine Zündeinheit (51) und wenigstens eine pyrotechnische Ladung (52), wobei das pyrotechnische Bauteil (5) derart angeordnet ist, dass das von diesem erzeugbare Heißgas auf das wenigstens eine Verbindungselement (4) gerichtet ist, und wobei das wenigstens eine Verbindungselement (4) durch das von dem wenigstens einen pyrotechnischen Bauteil (5) erzeugbare Heißgas derart schwächbar ist, dass das Schubelement (3) von dem Aktuator (2) trennbar ist.

2. Vorrichtung nach Anspruch 1, bei der das Verbindungselement (4) von dem Heißgas wenigstens teilweise um- und/oder durchströmbar ist.

3. Vorrichtung nach Anspruch 2, bei der das Verbindungselement (4) als Hohlniet ausgebildet ist.

4. Vorrichtung nach einem der vorstehenden Ansprüche, bei der das Verbindungselement (4) durch das von dem pyrotechnischen Bauteil (5) erzeugbare Heißgas derart verformbar ist, dass der Aktuator (2) in axialer Richtung unabhängig von dem Schubelement (3) bewegbar ist.

5. Vorrichtung nach einem der vorstehenden Ansprüche, bei der der Aktuator (2) eine Spindel (21) aufweist, die durch den Aktuator (2) in axialer Richtung bewegbar ist.

6. Vorrichtung nach Anspruch 5, bei der die Spindel (21) als Hohlspindel, Hohlkolben oder Vollspindel ausgebildet ist.

7. Vorrichtung nach einem der Ansprüche 5 oder 6, bei der das wenigstens eine Verbindungselement (4) zwischen der Spindel (21) und dem Schubelement (3) angeordnet ist.

8. Vorrichtung nach einem der vorherstehenden Ansprüchen, bei der mehrere Verbindungselemente (4) zwischen dem Aktuator (2) bzw. der Spindel (21) und dem Schubelement (3) angeordnet sind.

9. Vorrichtung nach Anspruch 8, bei der jedes Verbindungselement (4) jeweils einem pyrotechnisches Bauteil (5) zugeordnet ist.

10. Vorrichtung nach Anspruch 8, bei der mehrere Verbindungselemente (4) einem pyrotechnischen Bauteil (5) zugeordnet sind.

11. Vorrichtung nach Anspruch 10, bei der das von dem pyrotechnischen Bauteil (5) erzeugbare Heißgas auf mehrere Verbindungselemente (4) leitbar ist.

12. Vorrichtung nach einem der vorstehenden Ansprüche, bei der das Verbindungselement (4) und/oder das pyrotechnische Bauteil (5) durch wenigstens ein Dichtungselement (6) nach außen abgedichtet sind.

13. Vorrichtung nach einem der vorstehenden Ansprüche, bei der das Schubelement (3) als Schubstange (31) oder Schubrohr (32) ausgebildet ist.

14. Vorrichtung nach einem der vorstehenden Ansprüche, bei der der Aktuator (2) mit dem Schubelement (3) wenigstens durch Reaktivierung des pyrotechnischen Bauteils (5) und durch Anbringen wenigstens eines neuen Verbindungselements (4) wieder verbindbar ist.

15. Verwendung der Vorrichtung nach einem der vorstehenden Ansprüche,
zur Steuerung einer Taumelscheibe, bei der die Steuerung in jede Richtung jeweils mindestens zwei Vorrichtungen (1) aufweist, wobei bei Blockierung einer der beiden Vorrichtungen (1) pro Richtung, die blockierte Vorrichtung (1) durch Aktivierung des pyrotechnischen Bauteils (5) trennbar ist.

## Claims

1. Device comprising an actuator (2), a thrust element (3) which is axially driven by the actuator (2), at least one connecting element (4) which connects the actuator (2) and the thrust element (3) and which is arranged between the actuator (2) and the thrust element (3), at least one pyrotechnic component (5) comprising at least one ignition unit (51) and at least one pyrotechnic charge (52), wherein the pyrotechnic component (5) is arranged in such a manner that the hot gas producible thereby is directed towards the at least one connecting element (4), and wherein the at least one connecting element (4) can be weakened by the hot gas producible by the at least one pyrotechnic component (5) in such a manner that the thrust element (3) is separable from the actuator (2).

2. Device according to claim 1 in which the hot gas can at least partially flow around and/or through the connecting element (4).

3. Device according to claim 2 in which the connecting element (4) is configured in the form of a tubular rivet.

4. Device according to any of the preceding claims in which the connecting element (4) is deformable by the hot gas producible by the pyrotechnic component (5) in such a manner that the actuator (2) is movable in the axial direction independently of the thrust element (3).

5. Device according to any of the preceding claims in which the actuator (2) has a spindle (21) which is movable in the axial direction by means of the actuator (2).

6. Device according to claim 5 in which the spindle (21) is configured in the form of a hollow spindle, a hollow piston or a solid spindle.

7. Device according to any of claims 4 or 5 in which the at least one connecting element (4) is arranged between the spindle (21) and the thrust element (3).

8. Device according to any of the preceding claims in which a plurality of connecting elements (4) is arranged between the actuator (2) or the spindle (21) and the thrust element (3).

9. Device according to claim 8 in which each connecting element (4) is assigned to one pyrotechnic component (5).

10. Device according to claim 8 in which a plurality of connecting elements (4) is assigned to one pyrotechnic component (5).

11. Device according to claim 10 in which the hot gas producible by the pyrotechnic component (5) can be conducted to a plurality of connecting elements (4).

12. Device according to any of the preceding claims in which the connecting element (4) and/or the pyrotechnic component (5) are sealed towards the outside by means of at least one sealing element (6).

13. Device according to any of the preceding claims in which the thrust element (3) is configured in the form of a thrust rod (31) or a thrust tube (32).

14. Device according to any of the preceding claims in which the actuator (2) can be reconnected to the thrust element (3) at least by reactivating the pyrotechnic component (5) and by attaching at least one new connecting element (4).

15. Use of the device according to any of the preceding claims for controlling a swash plate in which the control system has at least two devices (1) in each direction, wherein in the event of blocking of one of the two devices (1) for each direction, the blocked device (1) is separable by activating the pyrotechnic component (5).

## Revendications

1. Dispositif présentant un actionneur (2), un élément de poussée (3) qui est entraîné axialement par l'actionneur (2), au moins un élément de liaison (4) qui relie l'actionneur (2) et l'élément de poussée (3) et qui est agencé entre l'actionneur (2) et l'élément de poussée (3), au moins un composant pyrotechnique (5) présentant au moins une unité d'allumage (51) et au moins une charge pyrotechnique (52), le composant pyrotechnique (5) étant agencé de telle sorte que le gaz chaux susceptible d'être engendré par celui-ci est orienté sur ledit au moins un élément de liaison (4), et ledit au moins un élément de liaison (4) pouvant être affaibli de telle sorte par le gaz chaud susceptible d'être engendré par ledit au moins un composant pyrotechnique (5) que l'élément de poussée (3) peut être séparé de l'actionneur (2).

2. Dispositif selon la revendication 1, dans lequel l'élément de liaison (4) peut être au moins contourné et/ou traversé par le gaz chaud.

3. Dispositif selon la revendication 2, dans lequel l'élément de liaison (4) est réalisé sous forme de rivet creux.

4. Dispositif selon l'une des revendications précédentes, dans lequel l'élément de liaison (4) peut être déformé de telle sorte par le gaz chaud susceptible d'être engendré par le composant pyrotechnique (5) que l'actionneur (2) peut être déplacé en direction axiale indépendamment de l'élément de poussée (3).

5. Dispositif selon l'une des revendications précédentes, dans lequel l' actionneur (2) présente une tige (21) qui peut être déplacée en direction axiale par l'actionneur (2).

6. Dispositif selon la revendication 5, dans lequel la tige (21) est réalisée sous forme de tige creuse, de piston creux ou de tige pleine.

7. Dispositif selon l'une des revendications 5 ou 6, dans lequel ledit au moins un élément de liaison (4) est agencé entre la tige (21) et l'élément de poussée (3)

8. Dispositif selon l'une des revendications précédentes, dans lequel plusieurs éléments de liaison (4) sont agencés entre l'actionneur (2) ou la tige (21), respectivement, et l'élément de poussée (3).

9. Dispositif selon la revendication 8, dans lequel chaque élément de liaison (4) est associé à un composant pyrotechnique (5) respectif.

10. Dispositif selon la revendication 8, dans lequel plusieurs éléments de liaison (4) sont associés à un composant pyrotechnique (5).

11. Dispositif selon la revendication 10, dans lequel le gaz chaud susceptible d'être engendré par le composant pyrotechnique (5) peut être dirigé sur plusieurs éléments de liaison (4).

12. Dispositif selon l'une des revendications précédentes, dans lequel l'élément de liaison (4) et/ou le composant pyrotechnique (5) sont étanchés vers l'extérieur par au moins un élément d'étanchéité (6).

13. Dispositif selon l'une des revendications précédentes, dans lequel l'élément de poussée (3) est réalisé sous forme de barre de poussée (31) ou de tube de poussée (32).

14. Dispositif selon l'une des revendications précédentes, dans lequel l'actionneur (2) peut être de nouveau relié à l'élément de poussée (3) au moins par réactivation du composant pyrotechnique (5) et par montage d'au moins un nouvel élément de liaison (4).

15. Utilisation du dispositif selon l'une des revendications précédentes, pour la commande d'un plateau oscillant, dans lequel la commande présente dans chaque direction respectivement au moins deux dispositifs (1), et en cas de blocage d'un des deux dispositifs (1) par direction, le dispositif (1) bloqué peut être séparé par activation du composant pyrotechnique (5).
